# EUROPEAN PATENT APPLICATION

(11) **EP 4 467 516 A1**
(43) Date of publication of application: **27.11.2024**
(21) Application number: 23315211.5
(22) Date of filing: 24.05.2023
(51) Int. Cl.: C01B 7/09

(54) **PROCESS FOR RECOVERY OF BROMINE FROM STREAMS CONTAINING HYDROGEN BROMIDE**

(71) Applicant: TotalEnergies OneTech, 92400 Courbevoie (FR)
(72) Inventor: Veryasov, Gleb, B-7181 Seneffe (BE)
(74) Representative: Mellet, Valérie Martine

(57) **Abstract**

The disclosure concerns a process for bromine production, comprising the steps of (a) providing one electrolytic cell (1) (b) providing a first input flow (101) at the anode side that is or comprises a HBr aqueous solution, and a second input flow (102) at the cathode side that is or comprises water; (c) performing electrolysis to convert the HBr aqueous solution into bromine, (d) recovering a liquid effluent (201) comprising bromine, (e) separating the liquid effluent into a first liquid phase (301) and a second liquid phase (302) comprising unreacted HBr, (f) recovering and (g) concentrating the second liquid phase to obtain a third liquid phase (401), wherein the concentration of the HBr in the second liquid phase is lower than the concentration of the HBr in the third liquid phase, and (h) taking over the third liquid phase in the first input flow.

## Description

### Technical field

The present disclosure pertains to a production process of bromine from hydrogen bromide, in particular from gaseous streams containing hydrogen bromide, and to an installation for producing thereof.

### Technical background

Hydrogen bromide (HBr) is a colourless, corrosive, and non-flammable gas. HBr fumes strongly in moist air. It is one of the strongest mineral acids, extremely soluble in water, forming a strong acid that is available as 48% or 68% solutions. HBr is a severe irritant to the eyes, skin, and nasal passages; high concentrations may penetrate the lungs resulting in oedema and haemorrhage.

There are many conventional industrial processes in which hydrogen bromide is produced as a by-product. However, hydrogen bromide by-products are not compatible with the environment, so, in most cases, they must first be neutralized to meet environmental regulations before being discharged into the environment.

Bromine is a compound used in different domains of the industry. For instance, it finds applications in production flame retardants or bromobutane rubbers, used in tyres. Yet the production of bromine remains complex and costly.

CN102482083A discloses a method for converting hydrogen bromide to elemental bromine. A portion of an initial hydrogen bromide-rich gas is thermally oxidized at a thermal oxidation temperature to produce a first fraction of elemental bromine and a remainder of the initial hydrogen bromide-rich gas. At least a portion of the remainder of the initial hydrogen bromide-rich gas is catalytically oxidized at a lower catalytic oxidation temperature to produce a second fraction of elemental bromine.

By way of illustration, bromine may be obtained by electrolysis. Electrolysis of hydrogen bromide in the aqueous phase is generally applied for the production of hydrogen and/or recovery of bromine from streams comprising hydrogen bromide (HBr).

The reaction could be written in the following way:

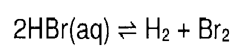

Bromine is almost insoluble in water. However, it could be dissolved in an HBr solution, as follows:

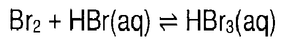

Depending on the molar ratios, different anions are formed with a general formula [Br₂ₙ₊₁]⁻, where n = 1,2,3, etc. Therefore, in standard operating conditions, the liquid effluent will be a homogeneous solution of Br₂ in aqueous HBr.

US5385650 discloses a process for recovering bromine from an acidic solution containing bromide ion comprising passing an electric current through said solution between an anode in contact with said solution and a cathode in electrical communication with said solution, thereby generating bromine by electrolysis of said solution at the anode to produce an electrolyzate containing bromine; and separating bromine as a vapour from said electrolyzate under negative pressure.

CN113789525 provides a process for electrolytic acidification of sodium bromide to produce bromine comprising the following steps:
a) the sodium bromide solution of a certain concentration is acidified with hydrochloric acid to obtain an acidified sodium bromide solution;
b) the acidified sodium bromide solution is pumped into the bottom of the electrolytic cell according to a certain flow rate, and the generated hydrogen enters the hydrogen scrubbing tower from the top of the electrolytic cell and removes a small amount of bromine gas for storage, and the generated bromine is dissolved in the electrolytic cell. In the acidified sodium bromide solution, a mixed solution is formed and enters the bromine distillation tower from the top overflow port of the electrolytic cell;
c) the mixed solution passes through the packing layer after being sprayed in the bromine distillation tower and is heated from top to bottom by gravity, and is heated by the bottom-up steam through the bottom of the bromine distillation tower;
d) the bromine in the mixed solution is steamed out in the bromine distillation tower and mixed with part of the water vapour, and then enters the bromine condenser from the top of the bromine distillation tower, and the residual liquid after steaming the bromine reaches the bottom of the bromine distillation tower, side by side to the residual liquid storage tank;
e) in the bromine condenser, bromine vapour and water vapour are condensed into a liquid state to form a mixture of water and bromine, and then enter the bromine-water separation bottle for separation to obtain bromine.

US2018222776 provides an electro generation system for the oxidation of bromide to bromine in an aqueous electrolyte solution comprising: a treatment chamber comprising at least one electrochemical cell to contain an aqueous electrolyte solution and an inlet and an outlet, wherein the aqueous electrolyte solution comprises bromide ions, chloride ions, or a mixture of bromide and chloride ions; at least one anode in the treatment chamber; and at least one cathode in the treatment chamber; a power supply in communication with the at least one anode and the at least one cathode to generate an electric current sufficient to generate bromine, chlorine, chloride ions, or a combination thereof, and reduce bromate formation in the aqueous electrolyte solution; an electrolyte reservoir for holding the aqueous electrolyte solution connected to the inlet; an aqueous electrolyte solution flow controller to control a selected volume of the electrolyte solution between the electrolyte reservoir and the electrochemical cell; and a pH adjusting mechanism comprising an acid reservoir for holding an acid connected to the treatment chamber, a pH monitor in communication with the treatment chamber; and a control unit in communication with the pH monitor and the acid reservoir to adjust the pH by adding the acid from the acid reservoir to the aqueous electrolyte solution.

There is a need for improvement in the process of recovery of the bromine produced by electrolysis of hydrogen bromide in the aqueous phase. In particular, there is a need for a process that is highly efficient, simple and easy to implement at an industrial scale and that is cheap.

### Summary

According to a first aspect, the disclosure provides for a process for bromine production comprising the following steps:
a) providing one or more electrolytic cells each comprising an anode, a cathode and an ion-exchange membrane placed between the anode and the cathode;
b) providing a first input flow at the anode side of the one or more electrolytic cells that is or comprises a hydrogen bromide aqueous solution, and a second input flow at the cathode side of the one or more electrolytic cells that is or comprises water or an aqueous solution of one or more mineral acids;
c) performing electrolysis to convert at least a part of the hydrogen bromide aqueous solution into bromine by operating the one or more electrolytic cells under electrolysis conditions;
d) recovering a liquid effluent comprising bromine from the anode side;
e) separating the liquid effluent from step d) into a first liquid phase comprising bromine and a second liquid phase comprising unreacted hydrogen bromide;
f) recovering the second liquid phase comprising unreacted hydrogen bromide, and optionally recovering the first liquid phase comprising bromine;
g) concentrating the second liquid phase to obtain a third liquid phase comprising hydrogen bromide, wherein the concentration of the hydrogen bromide in the second liquid phase is lower than the concentration of the hydrogen bromide in the third liquid phase; and
h) taking over the third liquid phase comprising hydrogen bromide in the first input flow.

Surprisingly, it has been found that it was possible to recover Br₂ from hydrogen bromide with high efficiency by using a closed loop of lean and enriched HBr solutions. More specifically, during the electrolysis in one or more electrolytic cells, a moderately or highly concentrated HBr aqueous solution is used at the anode side as an electrolyte, with the formation of hydrogen and bromine. Bromine is formed at the anode side and leaves the electrolytic cell together with the spent electrolyte comprising a low amount of unreacted hydrogen bromide. In a subsequent step, the bromine is separated and a second liquid phase having an HBr concentration lower than optimally required for an efficient electrolysis operation is obtained. However, rather than dispensing with this second liquid phase, the inventors have used the current process wherein the second liquid phase is recovered and concentrated to a concentration of bromide that allows it to be reintroduced in the process as an electrolyte. This greatly increases the efficiency of the process, as more hydrogen bromide is transformed in the desired products and there is no need of ensuring safe and environmental-friendly disposal of the spent electrolyte.

For example, the first input flow is obtained by mixing an aqueous solution with a gaseous phase comprising hydrogen bromide. Preferably the mixing of the aqueous solution with the gaseous phase comprising hydrogen bromide is a stripping process.

For example, the second input flow at the cathode side has a pH ranging from 0.1 to 5.0; with preference ranging from 0.5 to 2.0.

For example, , the aqueous solution of one or more mineral acids comprises one or more selected from hydrochloric acid (HCl), nitric acid (HNO₃), phosphoric acid (H₃PO₄), sulfuric acid (H₂SO₄), boric acid (H₃BO₃), hydrofluoric acid (HF), hydrobromic acid (HBr), perchloric acid (HClO₄), hydroiodic acid (HI), or any mixture thereof, preferably hydrobromic acid (HBr).

For example, the separation in step e) is performed by distillation or decantation.

For example, step e) comprises a decanting step e1) comprising passing the liquid effluent comprising bromine in a decanter to obtain the first liquid phase comprising bromine and the second liquid phase comprising unreacted hydrogen bromide; and optionally recovering the first liquid phase comprising bromine.

For example, the decanting step e1) is performed during a time of at least 10 minutes; preferably during a time ranging from 10 minutes to 1 hour.

For example, step e) comprises a drying step e2) comprising drying the first liquid phase comprising bromine, preferably by using molecular sieve. For example, the drying step e2) is performed in a drying unit using a molecular sieve. The final product is or comprises dry bromine.

For example, step g) is performed by distillation or by mixing the second liquid phase with a gaseous phase comprising bromide.

For example, before step g) the second liquid phase is taken over in the second input flow.

For example, the electrolysis conditions comprise a voltage of at least 0.9 V; preferably at least 1.0; more preferably at least 2.5 and even more preferably at least 4.0 V

For example, the electrolysis conditions comprise a voltage ranging from 0.9 to 10.0 V; preferably, ranging from 1.0 to 9.0 V; more preferably ranging from 2.5 to 8.0 V.

For example, the electrolysis conditions comprise an anode current density ranging from 0.5 to 10 kA/m²; preferably, from 0.6 to 9.0 kA/m²; more preferably, from 1.0 to 8.0 kA/m².

For example, in step c) the temperature of the solution during electrolysis ranges from 20 to 100°C; preferably from 60 to 85°C.

For example, the hydrogen bromide aqueous solution in the first input flow comprises from 15 to 48.3 wt.% of hydrogen bromide based on the total weight of the hydrogen bromide aqueous solution; or comprises at most 48.3 wt.% of hydrogen bromide based on the total weight of the hydrogen bromide aqueous solution.

For example, the second liquid phase is a hydrogen bromide aqueous solution comprising less than 35 wt.%, or less than 30 wt.% of hydrogen bromide based on the total weight of the hydrogen bromide aqueous solution.

For example, the bromide concentration in the second liquid phase comprising unreacted hydrogen bromide comprises less than 35 wt. % of hydrogen bromide based on the total weight of the hydrogen bromide aqueous solution.

For example, the ion-exchange membrane is a cation-exchange membrane. With preference, the cation-exchange membrane further comprises an ionomer, more particularly an ionomer comprising fluoropolymer having one or more sulfonic acid groups or one or more pendant sulfonic acid groups. For example, the cation-exchange membrane comprises one or more layers, wherein the layer or at least one of the layers comprises an ionomer, more particularly an ionomer comprising fluoropolymer having one or more sulfonic acid groups or one or more pendant sulfonic acid groups. For example, the cation-exchange membrane is a proton-exchange membrane preferably comprising an ionomer, more particularly an ionomer comprising fluoropolymer having one or more sulfonic acid groups or one or more pendant sulfonic acid groups.

For example, the anode comprises an anode catalyst that comprises platinum; with preference, the anode catalyst comprises at least 0.5 wt.% of platinum based on the total weight of the anode catalyst.

The cathode catalyst may be any suitable catalyst known from the art. For example, the cathode catalyst comprises platinum; with preference the cathode catalyst comprises 0.5 wt.% of platinum based on the total weight of the catalyst.

For example, the decanting step e1) is performed at a pressure of at least 0.15 MPa.

According to a second aspect, the disclosure provides an installation for bromine production according to the process of the first aspect; wherein the installation is remarkable in that it comprises one or more electrolytic cells comprising an anode, a cathode, an anode chamber, a cathode chamber and a solid polymer electrolyte membrane separating the anode chamber from the cathode chamber; at least a separation unit, at least a concentration unit and means to convey the liquid effluent exiting the anodic chamber of the one or more electrolytic cells to the separation unit, means to convey the second liquid phase from the separation unit to the concentration unit and optionally means to convey the third liquid phase to the first input flow.

For example, the separation unit is a decanter or a distillation column.

For example, the concentration unit is an absorber.

For example, the one or more electrolytic cells are selected from zero-gap electrolytic cells, two-gap electrolytic cells, catholyte-containing one-gap electrolytic cells and catholyte-free one-gap electrolytic cells; preferably the one or more electrolytic cells are zero-gap electrolytic cells, such as a membrane electrode assembly (MEA).

The particular features, structures, characteristics or embodiments may be combined in any suitable manner, as would be apparent to a person skilled in the art from this disclosure, in one or more embodiments.

### Description of the figures

- Figure 1 illustrates an installation according to the disclosure.
- Figure 2 illustrates a preferred embodiment of the installation according to the disclosure.
- Figure 3 illustrates a configuration of the flux in the electrolytic cell according to the preferred embodiment.
- Figure 4 illustrates the electrolytic cells configuration.
- Figure 5 illustrates the voltage increase during the operation in the electrolytical cells for Example 1 and Comparative Example.
- Figure 6 illustrates an absorption column

### Detailed description

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (*e.g*., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (*e.g*., from 1.0 to 5.0 includes both 1.0 and 5.0). Any numerical range recited herein is intended to include all sub-ranges subsumed therein.

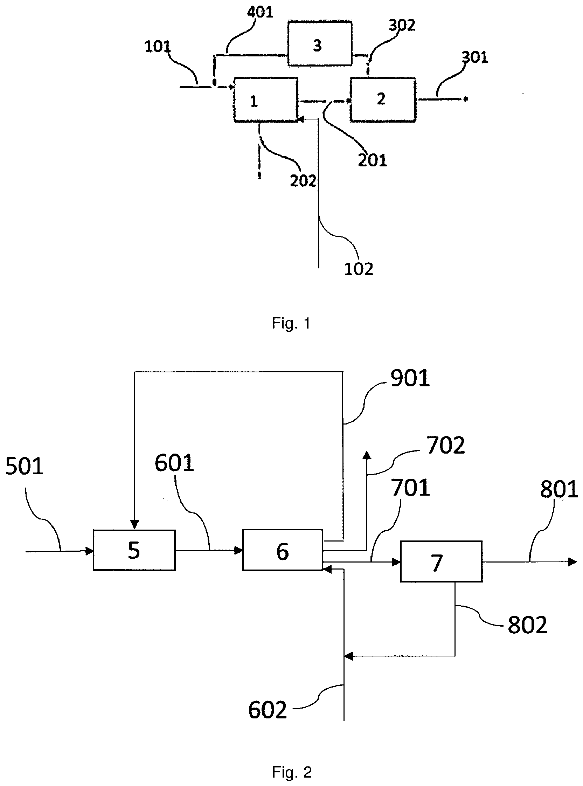

The present disclosure provides a process for bromine production and an installation to be used to perform such a process. The process and the installation will therefore be described jointly. Reference is made to figures 1-4 as regards the installation.

The process for bromine production comprises the following steps:
a) providing one or more electrolytic cells 1 each comprising an anode, a cathode and an ion-exchange membrane placed between the anode and the cathode;
b) providing a first input flow 101 at the anode side of the one or more electrolytic cells that is or comprises a hydrogen bromide aqueous solution, and a second input flow 102 at the cathode side of the one or more electrolytic cells that is or comprises water or an aqueous solution of one or more mineral acids;
c) performing electrolysis to convert at least a part of the hydrogen bromide aqueous solution into bromine by operating the one or more electrolytic cells under electrolysis conditions; and
d) recovering a liquid effluent 201 comprising bromine from the anode side;
e) separating the liquid effluent from step d) into a first liquid phase 301 comprising bromine and a second liquid phase 302 comprising unreacted hydrogen bromide; and optionally recovering the first liquid phase 301 comprising bromine.
f) recovering the second liquid phase 302 comprising unreacted hydrogen bromide;
g) concentrating the second liquid phase 302 to obtain a third liquid phase 401 comprising hydrogen bromide, wherein the concentration of the hydrogen bromide in the second liquid phase 302 is lower than the concentration of the hydrogen bromide in the third liquid phase 401; and
h) taking over the third liquid phase 401 comprising hydrogen bromide in the first input flow 101.

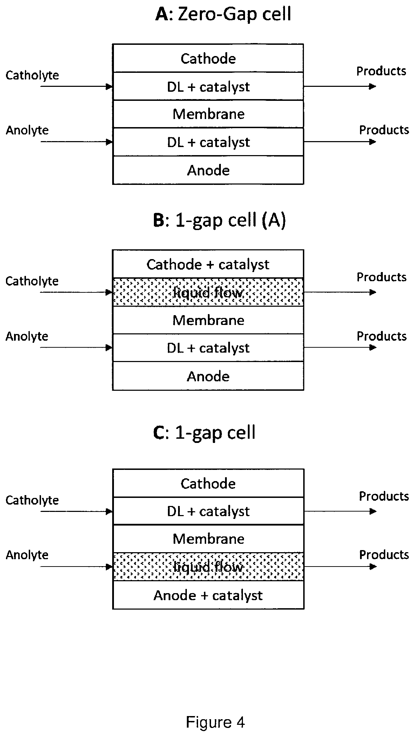

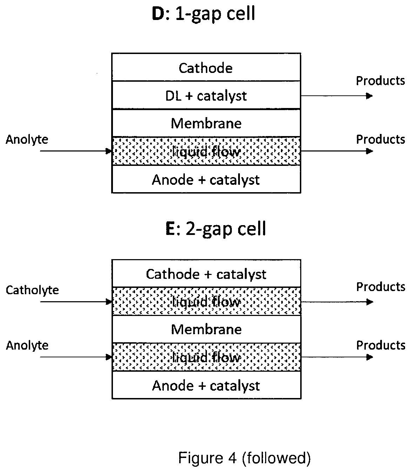

As regards step a) of providing one or more electrolytic cells 1:
According to the disclosure the one or more electrolytic cells 1 are selected from zero-gap electrolytic cells, two-gap electrolytic cells, or one-gap electrolytic, which could be catholyte-free one-gap electrolytic cells. Preferably the one or more electrolytic cells are zero-gap electrolytic cells, such as membrane electrode assembly (MEA). The different configurations are illustrated in figure 4.

In the cases the electrolytic cell is a zero-gap electrolytic cell (figure 2A) or a one-gap electrolytic cell (figure 2C and figure 2D), then the cathode catalyst layer is in contact with the ion-exchange membrane.

In the cases the electrolytic cell is a zero-gap electrolytic cell (figure 2A) or a one-gap electrolytic cell (figure 2A) then the anode catalyst layer is in contact with the ion-exchange membrane.

In the case wherein the electrolytic cell is a two-gap electrolytic cell (figure 2E) none of the cathode catalyst layer and anode catalyst layer is in contact with the ion-exchange membrane. This is due to the presence of both a catholyte and an anolyte.

In figure 4, DL is for diffusion layer, which is a porous media which enable uniform distribution of reactive liquids of gases on the surface of the electrodes and transports of electrons. For example, the zero-gap cell and the one-gap cell comprise at least one diffusion layer as illustrated on Figure 4. Suitable materials for the diffusion layer are known to the person skilled in the art. It is preferred that the diffusion layer is a conductive material. For example, the diffusion layer is a composite material comprising polytetrafluoroethylene (PTFE) and a conductive material such as carbon particles.

The anode catalyst and the cathode catalyst may be any suitable catalyst known from the art. The anode catalyst and the cathode catalyst can be the same or different.

For example, the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

For example, the anode catalyst comprises platinum; with preference the anode catalyst comprises at least 0.5 wt.% of platinum based on the total weight of the anode catalyst. However, it was reported that at high bromine concentration platinum losses could occur due to dissolution and poisoning (Kyu Taek Cho, Michael C. Tucker, Adam Z. Weber, Energy Technology, Volume 4, Issue 6, 2016, Pages 655-678)

Alternatively, DSA^{®} brand anode catalysts produced by De Nora company could be applied. This type of anode uses mixed metal oxide (MMO) coating which allows a long and stable operation.

Also, Lead Dioxide Titanium Electrode (Ti/PbO₂) anode could be used. The lead dioxide coating on titanium substrate has strong corrosion resistance and suitable for the media.

Mentioned anodes could be further modified by doping Ce or Bi metals to the anode catalyst using the techniques known in the art (Pengfei Xu, Xiaohong He, Junwei Mao and Yongming Tang, Journal of The Electrochemical Society, Volume 166, Number 13, 2019, 638).

For example, the cathode catalyst comprises platinum; with preference the cathode catalyst comprises 0.5 wt.% of platinum based on the total weight of the cathode catalyst.

The ion exchange membrane is a cation-exchange membrane (CEM), preferably a proton-exchange membrane (PEM). Both types of membranes are well-known by the person skilled in the art.

Typical cation exchange membranes include proton conducting membranes, such as the perfluorosulfonic acid polymer available under the trade designation Nafion from E. I. du Pont de Nemours and Company (DuPont) of Wilmington, Del. A proton-exchange membrane, or polymer-electrolyte membrane (PEM), is a semipermeable membrane generally made from ionomers and designed to conduct protons while acting as an electronic insulator and reactant barrier, e.g. to oxygen and hydrogen gas. Another example is commercial PEM membranes is Aquivion membranes developed by Solvay company.

Thus, the cation-exchange membrane can further comprise an ionomer, more particularly an ionomer comprising fluoropolymer having one or more sulfonic acid groups or one or more pendant sulfonic acid groups. For example, the cation-exchange membrane can comprise one or more layers, wherein the layer or at least one of the layers comprises an ionomer, more particularly an ionomer comprising fluoropolymer having one or more sulfonic acid groups or one or more pendant sulfonic acid groups.

For example, the ionomer comprises a perfluorinated sulfonic acid ionomer. For example, said perfluorinated sulfonic acid ionomer comprises sulfonated tetrafluoroethylene based fluoropolymer-copolymer (such as Nafion^{®} or 1,1,2,2-Tetrafluoroethene;1,1,2,2-tetrafluoro-2-[1,1,1,2,3,3-hexafluoro-3-(1,2,2-trifluoroethenoxy)propan-2-yl]oxyethanesulfonic acid), SSC, Aciplex, Flemion, 3M-perfluorinated sulfonic acid ionomer, Aquivion, an ionene, or a combination thereof.

Thus, in an embodiment, the ion-exchange membrane is a proton exchange membrane comprising one or more layers, wherein the layer or at least one of the layers comprises an ionomer comprising a fluoropolymer having one or more pendant sulfonic acid groups.

As regards step b) providing a first input flow 101 at the anode side of the one or more electrolytic cells 1 that is or comprises a hydrogen bromide aqueous solution, and a second input flow 102 at the cathode side of the one or more electrolytic cells 1 that is or comprises water or an aqueous solution of one or more mineral acids

The first input flow 101 provided at the anode side is or comprises a hydrogen bromide aqueous solution 101.

For example, hydrogen bromide (HBr) is present in the hydrogen bromide aqueous solution at a content of at least 15 wt.% of HBr based on the total weight of the hydrogen bromide aqueous solution; preferably at least 25 wt.%; more preferably at least 30 wt.%; even more preferably at least 45 wt.%.

In a preferred embodiment hydrogen bromide (HBr) is present in the hydrogen bromide aqueous solution at a content of at most 48.3 wt.% at 20 °C; and forms a constant-boiling azeotrope mixture.

For example, hydrogen bromide (HBr) is present in the hydrogen bromide aqueous solution at a content ranging from 10 to 48.3 wt.% of HBr based on the total weight of the hydrogen bromide aqueous solution; preferably ranging from 15 to 47.6 wt.%; more preferably ranging from 17 to 45 wt.%; even more preferably ranging from 19 to 42 wt.% or from 20 to 40 wt.% or from 21 wt.% to 39 wt.% or from 22 wt.% to 48.3 wt.%.

In a preferred embodiment, the first input flow 101 (*i.e*., the hydrogen bromide aqueous solution) is metal-free.

In an embodiment, the second input flow 102 is provided at the cathode side and is or comprises water or an aqueous solution of one or more mineral acids. Such aqueous solution of one or more mineral acids serves as a source of protons. With preference, said aqueous solution has a pH of 0.1-5.

For example, the aqueous solution of the one or more mineral acids comprises one or more selected from hydrochloric acid (HCl), nitric acid (HNOs), phosphoric acid (H₃PO₄), sulfuric acid (H₂SO₄), boric acid (H₃BO₃), hydrofluoric acid (HF), hydrobromic acid (HBr), perchloric acid (HClO₄), hydroiodic acid (HI), or any mixture thereof. With preference, the aqueous solution of the one or more mineral acids comprises hydrobromic acid, sulfuric acid, nitric acid, or mixture thereof, more preferably hydrobromic acid.

Preferably, the second input flow 102 is a lean hydrogen bromide aqueous solution at a content of less than 35 wt.%. More preferably the lean hydrogen bromide aqueous solution has a content of less than 25 wt.%.

For example, the first and/or the second input flow have liquid minute space velocity ranging from 0.1 to 20; preferably ranging from 0.2 to 2.
wherein the liquid minute space velocity (LMSV) is V1/V2, where V1 [L/min] - flow, V2 - volume of half-cell (between to electrode and membrane) wherein the LMSV is normalised.

For example, the first input flow 101 is obtained by mixing an aqueous solution with a gaseous phase comprising the bromide. Preferably the mixing of the aqueous solution with the gaseous phase comprising the bromide is a stripping process performed in an absorber.

The gaseous phase comprising bromide can be pure HBr vapour, HBr azeotrope vapour or any gas stream comprising HBr. Preferably, the gaseous phase comprising bromide is free of basic compounds.

### As regards step c) of performing an electrolysis

Operating the one or more electrolytic cells 1 comprises passing a current between the anode and the cathode.

For example, the electrolysis conditions comprise an anode current density of at least 0.5 kA/m²; preferably, at least 0.6 kA/m² or 4.5 kA/m²; more preferably, at least 1 kA/m² or 1.5 kA/m²; even more preferably at least 2.0 kA/m² and most preferably at least 2.2 kA/m² or at least 2.5 kA/m².

For example, the electrolysis conditions comprise an anode current density ranging from 0.5 to 10.0 kA/m²; preferably, from 0.6 to 9.0 kA/m²; more preferably, from 1 to 8.5 kA/m²; even more preferably from 1.5 to 8.0 kA/m² and most preferably from 2 to 7.8 kA/m² or from 2.2 to 7.5 kA/m².

For example, the electrolysis conditions comprise a voltage of at least 0.9 V or at least 1.0 V; preferably at least 1.1V or at least 1.2 V,

For example, the electrolysis conditions comprise a voltage ranging from 0.9 V to 10.0 V or from 1.0 V to 10.0 V; preferably from 1.1V to 9.5 V, more preferably from 1.2 V to 9.0 V.

The electrolysis conditions comprising high voltage and high current density ensure maximum HBr conversion (>50%) per pass and the formation of a two-phase system as an effluent.

For example, the electrolysis conditions comprise a temperature of the solution during electrolysis that is ranging from 20 to 100°C; preferably from 40 to 95°C; more preferably from 50 to 90°C; and even more preferably from 60 to 85°C.

For example, in step c) the temperature of the solution during electrolysis is ranging from 20 to 100°C; preferably from 60 to 85°C.

### As regards step d) of recovering a liquid effluent comprising bromine from the anode side

The liquid effluent 201 comprises bromine, water and and possibly unreacted hydrogen bromide.

In an embodiment, step d) further comprises recovering a gaseous effluent 202 comprising hydrogen at the cathode side.

In a preferred embodiment, step d) of recovering a liquid effluent from the anode chamber comprises cooling the liquid effluent at a temperature ranging from 10 to 40°C before the separating step e). This can be done using one or more heat exchangers.

### As regards the separating step e)

The separation in step e) may be performed by distillation or decantation in the separation unit 2.

The separation unit 2 may be any known in the art. For example, the separation unit 2 is a separation funnel or a decanter. Most preferred, the separation unit 2 is a decanter. Thus, in a preferred embodiment, step e) further comprises a decanting step e1) comprising passing the liquid effluent comprising bromine in the decanter to obtain the first liquid phase 301 comprising bromine and the second liquid phase 302 comprising unreacted hydrogen bromide. Optionally, the first liquid phase 301 comprising bromine may be recovered and stored for further use. The second liquid phase 302 is sent to the concentration unit 3 in step g).

The decanting step e1) is performed for a time sufficient to obtain a two phases separation. For example, the decanting step e1) is performed during a time of at least 10 minutes; preferably during a time ranging from 10 minutes to 1 hour.

In an embodiment, the decanting step e) is performed at a pressure of at least 0.12 MPa to avoid vapour formation so that the bromine is kept in a liquid phase.

For example; the decanting step e1) is performed at a pressure of at least 0.15 MPa; preferably at least 0.20 MPa; and/or at most 0.5 MPa.

For example, step e) may further comprise step e2) drying the first liquid phase comprising bromine 301.

### As regards the optional drying step e2)

The drying step is performed in any drying unit known in the art. For example, the drying step e2) is performed in a drying unit using a molecular sieve. The final product is or comprises dry bromine. Said molecular sieves could be, for instance 3A, which is a commercial product used for drying.

As regards step g) concentrating the second liquid phase to obtain a third liquid phase comprising bromide, wherein the concentration of the bromide in the second liquid phase 302 is lower than the concentration of the bromide in the third liquid phase 401.

For example, the bromide is present in the second liquid phase 302 at a content of less than 30 wt.% of HBr based on the total weight of the hydrogen bromide aqueous solution; preferably less than 20 wt.%; more preferably ranging from 10 wt.%; even more preferably less than 2 wt.%.

For example, the bromide is present in the third liquid phase 401 at a content ranging from 10 to 68.85 wt.% of HBr based on the total weight of the hydrogen bromide aqueous solution; preferably ranging from 15 to 60 wt.%; more preferably ranging from 17 to 55 wt.%; even more preferably ranging from 19 to 50 wt.% or from 20 to 50 wt.% or from 21 wt.% to 49.85 wt.% or from 22 wt.% to 48.85 wt.%.

The concentration in step g) may be performed in a concentration unit 3 by removing part of the water or by adding bromide; for example, hydrogen bromide. In an example, the concentration is performed by distillation or by mixing the second liquid phase 302 with a gaseous phase comprising bromide.

Concentration unit 3 may be any known in the art. For example, the concentration unit is a distillation column or an absorber. In a preferred embodiment, step g) is performed by mixing the second liquid phase 302 with a gaseous phase comprising bromide in the same absorber as used for obtaining the first input flow 101.

After the concentration, the third stream 401 is taken over in the first input flow 101 and fed to the electrolytical cell 1.

In a preferred embodiment, before step g), the second liquid phase 302 which comprises unreacted hydrogen bromide, is taken over in the second input flow 102.

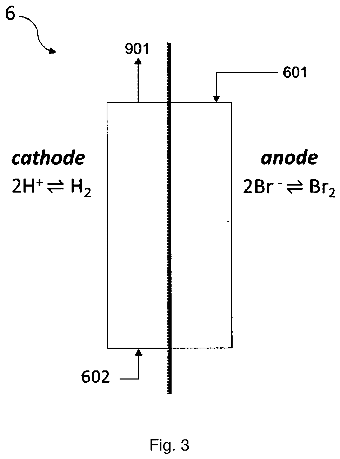

As can be seen from figures 2 and 3, a gaseous stream 501 comprising HBr and/or HBr azeotrope vapour is provided to an absorber 5. At the same time, an effluent with lean HBr aqueous solution or water, and which is liquid, flows through an absorber 5 and contacts a gaseous stream 501. The resulting liquid effluent is an aqueous stream enriched in HBr, which is further sent as a first input flow 601 to the anode side of the electrolytical cell 6. A second input flow 602 comprising water or an aqueous solution of one or more mineral acids, such as hydrogen bromide, is sent to the cathode side of the electrolytical cell 6. As a result of the electrolysis, a liquid effluent 701 comprising bromine (Br₂), and also water and unreacted (residual) HBr, is removed from the anode side and is directed to a separation unit 7, to obtain a first liquid phase 801 containing Br₂ substantially free of water and a second liquid phase 802 containing water and the unreacted HBr.

Further, the second liquid phase 802 is redirected to the cathode side of the electrolytical cell 6, for example directly and/or via the second input flow 602, and may absorb potential HBr formed due to crossover through the membrane. The lean HBr stream 901 exiting the cathode side is then redirected to the absorber 5, optionally with a water makeup, and serves as the liquid effluent with lean HBr aqueous solution or water, which is liquid, and which is flowed through the absorber 5. At the same time, hydrogen is produced at the cathode side of the electrolytical cell 6 and recovered as a hydrogen stream 702.

The disclosure also provides an installation for bromine production according to the process of the first aspect; wherein the installation comprises one or more electrolytic cells 1, 6 comprising an anode, a cathode, an anode chamber, a cathode chamber and a solid polymer electrolyte membrane separating the anode chamber from the cathode chamber; at least a separating unit 2, 7, at least a concentration unit 3, 5, and means to convey the liquid effluent exiting the anodic chamber of the one or more electrolytic cells to the separating unit, means to convey the second liquid phase from the separating unit to the concentration unit and optionally means to convey the third liquid phase to the first input flow.

For example, the separating unit is a decanter or a distillation column.

For example, the concentration unit is an absorber.

For example, the one or more electrolytic cells are selected from zero-gap electrolytic cells, two-gap electrolytic cells, catholyte-containing one-gap electrolytic cells and catholyte-free one-gap electrolytic cells; preferably the one or more electrolytic cells are zero-gap electrolytic cells, such as membrane electrode assembly (MEA).

### Examples

### Example 1

A symmetric zero-gap custom-made electrolytic cell with an active area of 40 cm² was assembled to perform the electrolysis tests. The cell comprises titanium end plates, carbon loaded polymer channel plates, gas diffusion electrodes made of carbon cloth with Pt loading (0.5 wt.%) and a reinforced Nation^{™} N324 membrane.

The Nation^{™} N324 is a perfluorosulfonic acid (PFSA) cation exchange membrane, combining outstanding chemical resistance with a strong polytetrafluoroethylene (PTFE) fibre reinforcement.

The cell was put on a heated shelf to maintain the operating temperature at 80 °C and liquid effluents were passed through a heat exchanger at 20 °C to avoid evaporation.

The HBr azeotrope (cca. 48 wt.% of HBr in water) was fed to the anode side using a teflonized peristaltic pump at a flow rate of 20 mL/min. To avoid membrane drying, the cathode side was fed with a stream of 2 wt.% of HBr in water at a flow rate of 10 mL/min.

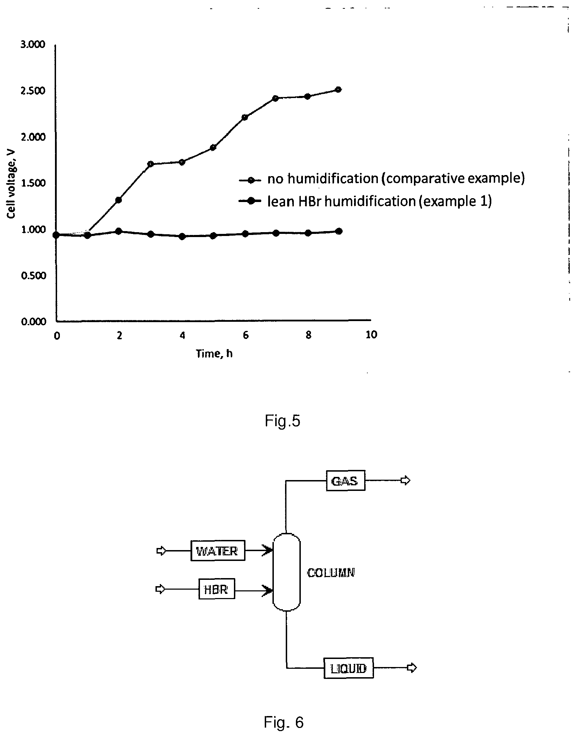

A stable operation of the cell was achieved with an operating voltage of about 1V, as shown in Figure 5.

### Comparative Example

A symmetric zero-gap custom made electrolytic cell with an active area of 40 cm² was assembled to perform the electrolysis tests. The cell comprises titanium end plates, carbon loaded polymer channel plates, gas diffusion electrodes made of carbon cloth with Pt loading (0.5 wt.%) and a reinforced Nation^{™} N324 membrane.

The cell was put on a heated shelf to maintain the operating temperature at 80 °C and liquid effluents were passed through a heat exchanger at 20 °C to avoid evaporation.

The HBr azeotrope (cca. 48 wt.% of HBr in water) was fed to the anode side using a teflonized peristaltic pump at a flow rate of 20 mL/min. The cathode side was flushed with dry nitrogen, 60 mL/min. Gradual voltage increase indicated instability of cell operation due to drying and loss of conductivity of the membrane, as shown in Figure 5.

### Example 2 - HBr absorption in water

For absorption of HBr a model system comprising an absorption column with 20 stages was studied.

The treated gas flow comprised dry HBr (0.4 kg/hr) and N₂ (0.2 kg/hr) and was fed on the bottom stage of the column (see figure 6). Liquid absorbent comprised pure water (1 kg/hr) and was fed on the top stage to have counter-current flow. The system operated at 2 barG. Exothermic absorption occurred leading to complete removal of HBr from the inlet stream. The outlets of the column comprise two streams:
1. gaseous effluent on the top of the column comprising N₂ and water vapor carried out due to heating of the column;
2. aqueous liquid stream comprising predominantly dissociated HBr solution (HBr + H₂O # H₃O⁺ + Br).

Results are provided in the below table:

| Stream Name | Units | GAS | HBr | LIQUID | WATER |
|---|---|---|---|---|---|
| Temperature | C | 94 | 25 | 130 | 25 |
| Pressure | bar | 2 | 2 | 2 | 2 |
| H₂O | kg/hr | 0.05 | 0.00 | 0.86 | 1.00 |
| HBr | kg/hr | 0.00 | 0.40 | 0.00 | 0.00 |
| H₃O⁺ | kg/hr | 0.00 | 0.00 | 0.09 | 0.00 |
| Br | kg/hr | 0.00 | 0.00 | 0.39 | 0.00 |
| N₂ | kg/hr | 0.20 | 0.20 | 0.00 | 0.00 |

## Claims

1. A process for bromine production comprising the following steps:
a) providing one or more electrolytic cells (1, 6) each comprising an anode, a cathode and an ion-exchange membrane placed between the anode and the cathode;
b) providing a first input flow (101, 601) at the anode side of the one or more electrolytic cells (1, 6) that is or comprises a hydrogen bromide aqueous solution, and a second input flow (102, 602) at the cathode side of the one or more electrolytic cells (1, 6) that is or comprises water or an aqueous solution of one or more mineral acids;
c) performing electrolysis to convert at least a part of the hydrogen bromide aqueous solution into bromine by operating the one or more electrolytic cells (1, 6) under electrolysis conditions;
d) recovering a liquid effluent (201, 701) comprising bromine from the anode side;
e) separating the liquid effluent (201, 701) from step d) into a first liquid phase (301, 801) comprising bromine and a second liquid phase (302, 802) comprising unreacted hydrogen bromide;
f) recovering the second liquid phase (302, 802) comprising unreacted hydrogen bromide (302, 802); and optionally recovering the first liquid phase (301, 801) comprising bromine (301, 801).
g) concentrating the second liquid phase (302, 802) to obtain a third liquid phase (401, 601) comprising hydrogen bromide, wherein the concentration of the hydrogen bromide in the second liquid phase is (302, 802) lower than the concentration of the hydrogen bromide in the third liquid phase (401, 601); and
h) taking over the third liquid phase (401, 601) comprising hydrogen bromide (401,601) in the first input flow (101, 601).

2. The process according to claim 1 is **characterized in that** the first input flow (101, 601) is obtained by mixing an aqueous solution with a gaseous phase comprising hydrogen bromide (501).

3. The process according to claim 2 is **characterized in that** the mixing of the aqueous solution with the gaseous phase comprising hydrogen bromide is a stripping process.

4. The process according to any one of claims 1 to 3 is **characterized in that** step e) comprises a decanting step e1) comprising passing the liquid effluent (201, 701) comprising bromine in a decanter to obtain the first liquid phase (301, 801) comprising bromine and the second liquid phase (302, 802) comprising unreacted hydrogen bromide.

5. The process according to any one of claims 1 to 4 is **characterized in that** step e) comprises a drying step e2) comprising drying the first liquid phase (301, 801) comprising bromine; preferably, by using a molecular sieve.

6. The process according to any one of claims 1 to 5 is **characterized in that** step g) is performed by mixing the second liquid phase (302, 802) with a gaseous phase comprising bromide, and/or **in that** the aqueous solution of one or more mineral acids comprises one or more selected from hydrochloric acid, nitric acid, phosphoric acid, sulfuric acid, boric acid, hydrofluoric acid, hydrobromic acid, perchloric acid, hydroiodic acid or any mixture thereof.

7. The process according to any one of claims 1 to 6 is **characterized in that** before step g), the second liquid phase (302, 802) is taken over in the second input flow (102, 602); and/or **in that** the electrolysis conditions comprise a voltage of at least 0.9 V; preferably ranging from 0.9 to 10.0 V.

8. The process according to any one of claims 1 to 7 is **characterized in that** the electrolysis conditions comprise an anode current density ranging from 0.5 to 10 kA/m²; preferably, from 0.6 to 9.0 kA/m²; more preferably, from 1.0 to 8.0 kA/m².

9. The process according to any one of claims 1 to 8 is **characterized in that** in step c) the temperature of the solution during electrolysis ranges from 20 to 100°C; preferably from 60 to 85°C.

10. The process according to any one of claims 1 to 9 is **characterized in that** the hydrogen bromide aqueous solution of the first input flow (102, 601) comprises from 15 to 48.3 wt.% of hydrogen bromide based on the total weight of the hydrogen bromide aqueous solution; or comprise at most 48.3 wt.% of hydrogen bromide based on the total weight of the hydrogen bromide aqueous solution.

11. The process according to any one of claims 1 to 10 is **characterized in that** the second liquid phase (302, 802) is a hydrogen bromide aqueous solution comprising less than 30 wt.% of hydrogen bromide based on the total weight of the hydrogen bromide aqueous solution; and/or **in that** the second input flow (102, 602) at the cathode side is an aqueous solution of one or more mineral acids.

12. The process according to any one of claims 1 to 11 is **characterized in that** the ion-exchange membrane is a cation-exchange membrane; with preference, the cation-exchange membrane further comprises an ionomer comprising fluoropolymer having one or more sulfonic acid groups..

13. An installation for bromine production according to the process of any one of claims 1 to 12 wherein the installation is **characterized in that** it comprises one or more electrolytic cells (1, 6) comprising an anode, a cathode, an anode chamber, a cathode chamber and a solid polymer electrolyte membrane separating the anode chamber from the cathode chamber; at least a separation unit (2, 7), at least a concentration unit (3, 5) and means to convey the liquid effluent (201, 701) exiting the anodic chamber of the one or more electrolytic cells (1, 6) to the separation unit (2, 7), means to convey the second liquid phase (302, 802, 901) from the separation unit (2, 7) to the concentration unit (3, 5) and optionally means to convey the third liquid phase (401) to the first input flow (101).

14. The installation according to claim 13 is **characterized in that** the one or more electrolytic cells (1, 6) are selected from zero-gap electrolytic cells, two-gap electrolytic cells, catholyte-containing one-gap electrolytic cells and catholyte-free one-gap electrolytic cells; preferably the one or more electrolytic cells (1, 6) are zero-gap electrolytic cells.

15. The installation according to claims 14 is **characterized in that** the separation unit (2, 7) is a decanter and/or the concentration unit (3, 5) is an absorber.
